# EUROPEAN PATENT SPECIFICATION

(11) **EP 4 124 008 B1**
(45) Date of publication and mention of the grant of the patent: **15.01.2025**
(21) Application number: 21186365.9
(22) Date of filing: 19.07.2021
(51) Int. Cl.: H04N 1/60

(54) **ENHANCING COLOR CONSISTENCY BETWEEN BATCHES OF PRINTED OBJECTS**
VERBESSERUNG DER FARBKONSISTENZ ZWISCHEN CHARGEN VON GEDRUCKTEN GEGENSTÄNDEN
AMÉLIORATION DE LA COHÉRENCE DE COULEUR ENTRE DES LOTS D'OBJETS IMPRIMÉS

(43) Date of publication of application: 25.01.2023
(73) Proprietor: AGFA NV, 2640 Mortsel (BE); ECO3 BV, 2640 Mortsel (BE)
(72) Inventor: MAHY, Marc, 2640 Mortsel (BE)
(74) Representative: Van Garsse, Joris Marc H

(56) References cited:
- WO-A1-2006/045341
- WO-A1-2020/079067
- US-B1- 7 408 678

## Description

### Technical Field

The invention is related to enhance color consistency between batches of printed objects.

### Background Art

To inform and/or to please people, a lot of objects are decorated with an image such as a photo, a logo or even an OR-code. Said decoration can be made by hand or coating but it is nowadays mainly produced by a printing system, sometimes called reproduction systems. The image may be achromatic but to inform and/or to please people such images have more than one color so they mainly produced by a color printing system.

The colors of the images are produced by the colorants of the printing systems addressed with steering values. The colorants of an inkjet printing system are typically a set of inks. The colorants are printed on a medium before it is applied on the object or they are printed directly on the object itself.

Nowadays, more and more applications are being supported by digital printing devices as these systems are easier to set up, are often more economic for smaller production runs and can be used in a more flexible way. This is not only related to the print workflow and the ability to support automation of the print process. Flexibility here is also related to setting up the printing system with different ink sets, the use of multi-density inks and multiple drop sizes to increase the apparent resolution and the support of a wide variety of print substrates.

Some print applications, however, are quite color critical, meaning that the color reproduction accuracy needs to be below well-defined tolerances. A typical example here is décor printing for flooring or furniture applications as the reproduced prints needs to match not only within one print run but also over time for a given printing system or between printing systems. These tolerances can be defined based either on acceptability conditions or perceptibility criteria. Acceptability here refers to prints that may have a color difference but the difference is within the acceptance for the application at hand. A typical example here is color data with some color variations that are accepted as typical variations for the given decor. This can be images with some natural content such as wooden or stone decors. Perceptibility conditions on the other hand refer to color differences that are at the visual threshold. A typical example here is a uniform colored object where color differences should match perfectly as any perceptual difference can be easily seen, definitely if both objects are put next to each other. Experimental data indicates that the tolerance on lightness as defined by the CIELAB system are less critical than differences between colors with the same lightness for acceptability conditions compared to perceptibility conditions. Additionally, in case of perceptibility set-ups, there is an increased sensitivity for lightness if uniform samples are put in contact to each other, also known as the crispening effect. Most delta-E measures do not take into account the crispening effect. The difference between acceptability and perceptibility tolerances are supported via parameters by the most advanced color difference measures such as deltaE₀₀, deltaE_{CMC} and deltaE₉₄. The conventional deltaE_{ab} does not make any distinction between all the different set-ups. Hence color tolerances should be defined for a well-selected delta-E distance measure.

In general, color matching between different devices is done for typical viewing conditions of which the most important ones are the illuminant and the observer. This results in a proper color match for the given viewing conditions however if these change there is no guarantee a match is retained. This is typically seen if neutrals are reproduced with a CMY ink set; i.e. for the given standard viewing conditions such as D50 and the 2-degree observer a match is obtained but if another illuminant is used such as for most indoor lighting neutrals easily will become slightly colored (greenish, yellowish, bluish, ...).

There is a need to set-up a color management workflow so that prints can be reproduced for the most critical viewing conditions. Reproducing a print will be at least limited to the variation of the measurement data used to measure colors on the one hand and the stability of the color reproduction device on the other hand. However, many more factors affect the resulting output such as the calibration approach, the applied color management workflow (used rendering intent, used profiles, used CMM, ...) and specific user settings / preferences to name a few.

In method for batches of printed objects, the variability of printed objects should only depend on the stability of the used color measurement devices and the printing system. With a conventional CMS (Color Management System) approach as supported by the ICC there is no guarantee that printed objects will color match in the most accurate way. Many techniques are being used in the field such as G7, SCTV or conventional density calibration as discussed by ISO 12647/x to name a few. None of these systems guarantee consistent colors as defined by CIELAB coordinates resulting in e.g. minimal delta-E's for the solids (primary inks with ink values equal to 100%). As a result, the gamut of printing systems will be different and hence out-of-gamut colors can be mapped differently during the conversion from source images, often represented in an RGB color space such as Adobe RGB, to the color space of the printing system.

Also the color data upon which both the calibration and profiling is based is obtained by printing color targets consisting of uniform color patches and measuring them. This results in a color behavior of a given printing system for these patches but per patch no information is available regarding the variation of its color values so that measurements deviating from the real behavior of the printing system result in systematic errors.

A proper implementation of process control during the calibration and characterization of printing systems will prevent such a mismatch. On the other hand, there is no guarantee that the color targets used to create ICC profiles are optimal for a given image to be printed. Due to errors in the printer model, color patches not occurring in the characterization target may result in color differences compared to the real behavior of the printing system. Also in this case systematic errors may occur. And finally, applying profiles to image data is based on the concatenation of color tables that also results in color differences due to interpolation errors, definitely for source colors (input data) at or near the gamut boundary of the digital printing device (destination device).

US7408678 discloses a method that effectively transforms the data from the source device color space to the destination device color space, and preserves the gamut compression in the saturated colors, while maintaining a realistic black color.

### Summary of invention

The present invention comprises the steps for enhancing color consistency between batches of printed objects, more preferably decorative objects, having an image layer which is printed by a printing system, preferably an inkjet printing system. This method is defined in Claim 1 for having an effective way of color consistency between batches of decorative objects.

The present invention is performed mainly by a computer-implemented method. An embodiment of the present invention is a workflow system comprising means for carrying out steps of the method of claim 1.

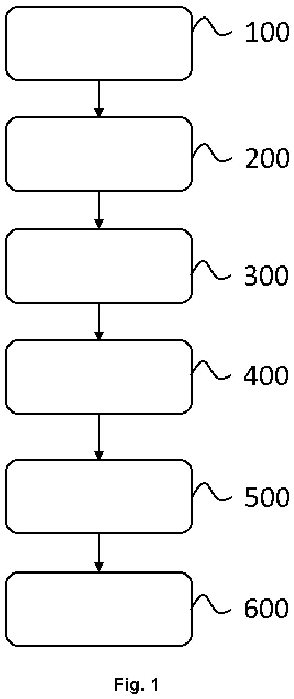

Figure 1 represents a flow-chart of an embodiment of the present invention.

### Description of embodiments

An embodiment of the present invention is a method for enhancing color consistency between batches of printed objects representing a same image wherein the method comprises the steps of:
- selecting an image, determined in an input colorant space where from an input color profile is obtained (100);
- selecting a master color profile for converting colors to a master colorant space wherein said master color profile is determined by a master color characterization setting (200);
- obtaining a master image in a master colorant space from the selected image by color converting the selected image from the input colorant space to the master colorant space with the input color profile and the master output color profile (300);
- selecting a printing system for a batch of a printed object comprising the selected image and obtaining an output color profile for converting colors to a batch colorant space wherein said batch color profile is determined by a batch color characterization setting (400);
- color converting the master image from the master colorant space to the batch colorant space with the master output color profile and the batch output color profile (500);
- printing the color converted master image on the printing system to obtain the batch of the printed object (600); and
wherein the batch color characterization setting is the same as the master color characterization setting.

By using the same color characterization setting between batches, it is found that the color consistency between batches is enhanced and by using always, the same master image with master color output profile during the several batches of a printed object, the reference is always made to said master image so less inaccuracies in color conversions and color mismatches are made with said embodiment. Said image may be also a group of images.

Said embodiment contains a computer-implemented method with interactions of the operator of the printing system. The printing system may be using any type of technology such as offset, gravure, but preferably it is using digital printing technology such as xerographic or inkjet technology, more preferably the printing system is an inkjet printing system.

An embodiment of the present invention is a workflow system comprising means, such as a data processing apparatus, for carrying out steps of said method. The workflow system preferably comprises means collecting in a memory the master color output profile with the master image and means for transferring the content of said memory to the selected printing system wherein said content is used for transforming the master image to the colorant space of the selected printing system. By using the same color characterization setting it is found that the color consistency between batches is enhanced. That is why also the color characterization setting has to be transferred to the selected printing system. The workflow system is hereby preferably an extension of an existing prepress workflow system such as Asanti^{™} Workflow from AGFA^{™}.

An object of the embodiment may be any type of material but preferably it is a printable substrate, whether or not with a colorant receivable layer such as paper. A batch of a printed object is the manufacturing of one or multiple printed objects within a certain period of time by a printing system. Another batch is printed in another period of time (= another time-frame) and/or by another printing system.

If there are multiple batches, this is more than one, for said printed objects, the master output color profile may be replaced by the batch output color profile of the first batch.

The method of the present embodiment and following preferred embodiments is extremely important and advantageous for a digitally printed object which forms a decorative layer of a ceramic tile, a laminate panel, vinyl tile, a window glass, a natural leather or fabric. The manufacturing of ceramic tiles, laminate panels, vinyl tiles, inkjet printed window glasses, inkjet printed natural leathers, inkjet printed fabrics, inkjet printed wallpapers. With said preferred method short runs are possible with enhanced color consistency between batches. The number of printed objects can be reduced and the stocks of said manufactured objects is hereby also reduced which is an economic benefit.

In a preferred embodiment the master color characterization setting is
a) a limitation of the number of colorants; or
b) maximizing the use of colorants with a L*-value lower than 30, more preferably lower than 20 wherein L*-value is the luminance coordinate of CIE-LAB-color space with the use of CIE Standard Illuminant D50; and/or
c) maximizing the use of colorants with an a*-value and b*-value lower than 30, more preferably lower than 20 wherein a*- and b*-value define together the chroma in the CIE-LAB-color space with the use of CIE Standard Illuminant D50. It is found that said settings gives a less metameric effect and the colors of printed objects are less influenced by the illuminant.

It is found that the color consistency between batches can even be more enhanced when the master is also defined by a master calibrating setting; and the batch color profile is also defined by a batch calibration setting; and wherein the master calibrating setting is the same as the batch calibrating setting. Said master color calibration setting has then also to be transferred to the selected printing system for the following batch. The workflow system preferably comprises means collecting in a memory the master calibrating setting and means for transferring the content of said memory to the selected printing system wherein said content is also used for transforming the master image to the colorant space of the selected printing system.

For color conversion it is known that several types of color mappings can be used such as perceptual rendering intents. It is found for the present embodiment that the color consistency between batches with the embodiment can enhanced even more when the color conversion steps are using absolute colorimetric rendering intent and more preferably using absolute tone mapping because here the neutrals are better preserved instead of using the absolute colorimetric rendering intent. For color mapping preferably spectral mapping is used so metameric differences can be solved even better.

In a research for the present embodiment, the color consistency between batches of printed objects can also be enhanced with a master color output profile which comprises a grid of color measurements of combinations of steering values in the master colorant space wherein said color measurements and said combinations are used for color conversions between colorant spaces and wherein said grid comprises color measurements of dominant colors extracted, preferably with k-means clustering, from the master image.

The same was found when the batch color output profile comprises a grid of color measurements of combinations of steering values in the batch colorant space wherein said color measurements and said combinations are used for color conversions between colorant spaces and wherein said grid comprises either color measurements of dominant colors extracted, preferably with k-means clustering, from the color converted master image; or color measurements of the dominant colors of the master image color converted to the batch colorant space.

Color measurements of combinations of steering values in a batch colorant space or a master colorant space are preferably measured spectrally. For some printed objects there is a need to be independent for an illuminant. For example, in the graphic arts the standard illuminant is D50 but in some print applications such as digital printed laminate the standard illuminant is D65 so to make conversions possible wherein different illuminants are used between batches spectral measurements are an advantage to minimize bad color conversions.

It is found that to enhance the color consistency between batches, it is preferred that the output color profiles in the present embodiments are regularized to guarantee the generation of accurate and stable colors. After the regularization the color profile is called a regular color profile.

Preferably during the printing-step of the present embodiments additionally a print-target is printed which comprises patches of dominant colors extracted, preferably with k-means clustering, from the color converted master image for evaluating the prints on consistency by measuring said patches. By said evaluation the current color behavior and over time the stability of the printing press can be measured.

The advantage of the embodiments and preferred embodiments is that based on the setup of a set of master images combined with a master color profile and a master color characterization setting batches can be made accurately on a printing system over time or between different printing systems. No dedicated data needs to be exchanged per batch as master images are created in advance. In this approach the input data given by the master images and the corresponding master color profile define the aim color values of the data with tolerance equal to zero, hence the only way to increase the color accuracy can be obtained by improving the batch color profile as good as possible. The accuracy of the batch profile can always be improved significantly based on the dominant colors of the master image. The aim values for these color patches is also defined by the master profile (forward evaluation from the master color values to lab or spectral values) and hence they also are defined by a color tolerance of zero. This can be done by any user worldwide without having to print, measure and exchange dedicated color patches or reference measurements. The disadvantage of exchanging typical printer data is that the data needs to be printed and proper average data needs to be collected for the printing system of a batch. As the data is printed and measured there is always an error. Hence setting up a batch for a printed object is not only easier to implement, the error of the reference data is also avoided in the proposed reprint technique.

To support the whole setup for making batches of printed objects in an automated way, per step data is collected and stored for later usage.

Typically, the data is used to compare the result of different batches. Hence the workflow system comprises preferably means to visualize the color differences between batches of a printed object. Hereby the operator of a printing system or the workflow system can judge if a certain batch of a printed object is within the color tolerances as determined for a given print job.

### Inkjet printing system

The inkjet printing system of a preferred embodiment is capable to apply an image on an object as an image layer. This can be done directly on the objects such as direct digital printing on a glass door or first printing the image on a medium which is than applied on the object such as digital printing the image on a transparent sticky foil which is then glued on a glass door.

An inkjet printing system comprises one or more inkjet print heads and one or more inks as colorant which are jetted for forming the image layer by supplying halftoned images to said one or more print heads.

Said inks are preferably selected from aqueous pigmented inkjet inks, solvent based pigmented inkjet inks and radiation curable pigmented inkjet inks. Aqueous pigmented inkjet inks are most preferred because they pose low safety risks for humans and animals when they come in contact with the image layer of the printed object. Said inks are preferably compliant with Swiss Ordinance list and Nestlé exclusive list.

Inkjet print head are available from TOSHIBA TEC^{™}, RICOH^{™} and XAAR^{™}. Through-flow inkjet print heads are preferred in the present invention, because they enhance the reliability of inkjet printing system.

Said inkjet printing system is preferably used for the batch manufacturing of - inkjet-printed flooring such as ceramic tile; laminate panel, vinyl tile; or
- inkjet-printed natural leather; or
- inkjet-printed fabric or
- inkjet-printed wallpaper or
- inkjet-printed furniture or
- inkjet-printed window glass as decorative object.

Examples of such inkjet printing systems are AGFA^{™}'s InterioJet 3300; FERRO^{™}'s Dip-Tech DX-3, EFI^{™}'s Reggiani BOLT.

The jetted colorants are preferably dried by a drying device to fix the colorants to the medium or the object itself. A drying device may comprise an infrared radiation source or an UV curing device.

In the present invention the image layer is preferably formed by jetting the image on a medium, more preferably on a continuous substrate web which is transported by a web-fed roll-to-roll process or a web-fed-roll-to-sheet process. The transport of a medium should be controlled very well because it influences the color consistency for example by irregular transport or web swim of continuous substrate web but solutions are well-known such as implemented methods in
- Agfa Dotrix Modular by manufacturer AGFA NV;
- KBA Rotajet by manufacturer Koenig & Bauer AG;
- Rho 312R Plus/LED by manufacturer Durst Phototechnik AG;
- Gallus Labelfire 340 by manufacturer Heidelberg Druckmaschinen Aktiengesellschaft.

The inkjet printing system is preferably a single pass inkjet printing system to enhance the production timings of the printed objects.

The big advantageous of using inkjet printing systems is that fast generation of printed objects is possible and less stock is needed for printed objects.

### Manufacturing decorative flat surfaces

The method is preferably part of manufacturing of decorative flat surfaces wherein the image-layer is formed by the steps of the present embodiments. Herein the image is preferably printed on a continuous substrate to form said image-layer.

The continuous substrate web is preferably a paper substrate which has a weight less than 150 g/m² and the image is printed with one or more aqueous pigmented inkjet inks for forming said image-layer. Further, said one or more aqueous pigmented inkjet inks are preferably jetted before or after impregnation of the substrate web with a thermosetting resin. Then the method of the present invention preferably comprises the step:
- applying before step a) on the paper substrate at least one ink-receiving layer containing a polyvinylalcohol polymer and an inorganic pigment, wherein more preferably an outermost ink-receiving layer contains no inorganic pigment or contains a smaller content of inorganic pigment than an ink-receiving layer between the paper substrate and the outermost ink-receiving layer.

The decorative flat surface is preferably a decorative panel which is more preferably selected from the group consisting of flooring, kitchen, furniture and wall panels. Herein the printed continuous substrate web, whether or not cut in sheets, is applied on a core layer, such as a MDF-plate, and optional other layers, such as balancing layer, protective layer or a sound-absorbing layer where after the whole assembly of substrate webs and said one or more layers is heat pressed together. For example, DPL process (Direct Pressure Laminate) is a known method for manufacturing of decorative panels. The paper substrate has preferably a porosity according to Gurley's method (DIN 53120) between 8 and 20 seconds.

The thermosetting resin is preferably selected from the group consisting of melamine-formaldehyde based resins, ureum-formaldehyde based resins and phenol-formaldehyde based resins.

The core layer is preferably made of wood-based materials, such as particle board, MDF or HDF (Medium Density Fibreboard or High Density Fibreboard), Oriented Strand Board (OSB) or the like. Use can also be made of boards of synthetic material or boards hardened by means of water, such as cement boards. In a particularly preferred embodiment, the core layer is a MDF or HDF board.

Or the continuous substrate web is preferably a thermoplastic substrate which has a weight less than 150 g/m² and which is based on a material selected from the group consisting of polyvinylchloride (PVC), polypropylene (PP), polyethylene (PE), polyethylene-terephthalate (PET) and thermoplastic polyurethane (TPU) and combinations thereof and the image is printed with one or more UV curable inkjet inks for forming said image layer. Said latest type of continuous substrate web is for example ideal for manufacturing luxury vinyl tiles (LVT). WO2018060189 (AGFA NV) discloses said manufacturing method.

### Color profiles

For managing colors of images on printing systems and between printing systems, the use of color profiles is well-known. They are mainly used in color management systems. The International Color Consortium (ICC) encouraged the support of their ICC profile format which is later approved as an International Standard, ISO 15076-1.

By characterizing the colors of a printing systems an output profile is obtained by measuring a plurality of printed patches. Said patches have steering values for the colorants of the printing systems and mainly generated in a print target such as an IT8.7/3 - 1993 (R2003) a standard for characterization of a CMYK printing system. Typically, such output profiles comprises a look-up-table with as input: steering values of the colorants and as output: color values. Said color values can be defined in psycho-physical spaces such as tristimulus spaces (e.g. XYZ) or psycho-uniform spaces (e.g. CIELAB or CIECAM16) or standard color spaces (e.g. sRGB) but preferably spectral values are used to avoid the dependency of a given illuminant. The color values are obtained by measuring said patches, typically by making use of a spectro-photometer but for some special applications also BRDF measurments may be beneficial.

The steering values can be limited per colorant or the maximum total colorant coverage, also called global ink limitation can be constained to a maximal value. The maximum total colorant coverage is also known in the technical field of color management as TAC (total area coverage). Such maximum total colorant coverage is an example of a color characterization setting or can be part of a color characterization setting. For example, for the selection of a TAC a decision has to be made based on the maximum amount of colorant that is still acceptable by the media or the object and that results in sufficient contrast of the printed object. Too much colorant may stain and the media may wobble; if the maximum amount of colorants is too low the prints will be too faint, lacking contrast.

Not all possible steering values for the printing systems are stored in an output profile to reduce the profile size.

Normally the input of the look-up-table is a regular grid between the steering values ranging typically from 0 % till 100 %, for example with steps of 20%. Interpolation techniques between said values is then used to cover in between combinations. From the input a colorant space can be determined and from the output a color space can be defined which corresponds to measured color values for corresponding colorant combinations in the colorant space.

The print target is preferably printed more than once and the printed targets are measured. The color measurements of corresponding patches between said print targets are averaged to enhance the batch consistency in the presented embodiment even more.

The measurements are typically measured with color spectrophotometers such as eXact^{™} portable spectrophotometer of XRite^{™} or the CCD-based measurement technology of Rapid Spectro Cube^{™} from ColorGate^{™}.

Similarly, an image also has a source where it is created or generated from. For such an image as source profile an input profile can be obtained which characterizes said source such as a camera or RGB-scanner. The ICC workflow defines said input profile as a profile for an input device. Alternatively, if the source image is created artificially, often a display profile as source profile is used to characterize its colors.

ColorTune^{™} of AGFA^{™} is for example a tool for making, editing, assessing and converting color profiles.

A color management system preferably uses said source and output profile to match the colors of the image with a printed copy of the image generated with the printing system. By preference an n-ink model is created from the forward look-up-table of the output color profile (transform from colorant space to color space) where after the n-ink model is inversed to create the transform from color space to the colorant space of the printing system. The inversed n-ink model may also be stored in the output color profile as a look-up-table, also called a color separation table.

Through an n-ink model from the mentioned look-up-table of an input color profile and an inversed n-ink model of an output color profile, colors of the image are converted to colorant values of the printing system. The ICC workflow uses a standard color space also called profile connection space (PCS) to translate the colors from the image to said PCS and from said PCS to the colorant space of the printing device.

The color profiles in the present embodiments are preferably regularized to guarantee the generation of accurate and stable colors. Regularization is a method in mathematics which is the process of adding information in order to solve an ill-posed problem or to prevent overfitting. Regularization can be applied to objective functions in ill-posed optimization problems. The regularization term, or penalty, imposes a cost on the optimization function to make the optimal solution unique. After the regularization the color profile is called a regular color profile. An example of such regularization is disclosed in in MAHY, Marc; TUNITSKY, Dmitry; VANDE VELDE, Keen; SYSTEM AND METHOD FOR REGULARIZING AN INK MODEL FOR A COLOR DEVICE Pub. No.: WO/2013/124369*. International Application No.:* PC T/EP2013/053480. Publication Date: 29.08.2013*. International Filing Date: 21.02.2013.* Herein is a created 3-ink model from the look-up-table regular if there is a one to one relation (bijective transformation; > unique solution) between a) the three-dimensional colorant space and b) a tristimulus space (e.g. XYZ) or psycho-uniform space (e.g. CIELAB or CIECAM16). Herein is a created 4-ink model from the look-up-table regular if
* all colorant combinations resulting in the same color in color space lie on one connected path in the colorant gamut.- all paths resulting in the same color in color space start and end at the boundary of the colorant cube;
* for all colors at the boundary of the color gamut, there is just one colorant combination at the boundary of the colorant domain to obtain this color (> unique solution).

If the printing device has more than 3 colorants, some colors can be represented by more than one colorant value set for said printing device. In the creation of the inversed n-ink-model it is preferred, next to a limitation of the steering values per colorant and/or a limitation of the TAC as constraints;
a) to limit the number of colorants or to maximize the use of colorants with a L*-value lower than 30, more preferably lower than 20 wherein L*-value is the luminance coordinate of CIE-LAB-color space with the use of CIE Standard Illuminant D50; and/or
b) to maximize the use of colorants with an a*-value and b*-value lower than 30, more preferably lower than 20 wherein a*- and b*-value define together the chroma in the CIE-LAB-color space with the use of CIE Standard Illuminant D50.

The one or more constraints between the multiple colorants, such as GCR (gray component replacement), for the creation of the inversed n-ink-model are assembled in a color characterization setting which is preferably adaptable with for example other limitation settings. Preferably, several color characterization settings are stored in the memory of the data processing unit.

For color conversion it is known that several types of color mappings can be used such as perceptual rendering intents. It is found for the present embodiment that the color consistency between batches with the embodiment can enhanced even more when the color conversion steps are using absolute colorimetric rendering intent and more preferably using absolute tone mapping because here the neutrals are better preserved instead of using absolute colorimetric rendering intent and most preferably spectral matching is even applied. Absolute tone mapping is the same as absolute colorimetric if all colors of an image are in gamut but if colors are out-of-gamut, absolute tone mapping will compress the colors such that neutrals are preserved according their original dynamic range as good as possible. To simulate the contrast of the original image, a tone compression is applied such that from a visual point of view the contrast reduction is camouflaged as much as possible.

In practice, spectral matches cannot always be obtained, hence color conversions need be optimized for a given set of illuminants/observers. In general, spectral matching is hard between prints of substantial different color printing systems. Often the delta-E tolerance for color critical applications is so small that almost perfect spectral matches are required. Nevertheless, this can be obtained in a practical way by setting up two almost identical printing systems. These systems have ideally the same characteristics such as the same ink set, substrate, printing technology, printing settings (e.g. print passes in inkjet printing), print resolution and ink drop sizes. As two printing systems can never be the same e.g. due to color tolerances of the production of inks and substrates, proper adjustments to match the systems are needed in the calibration and/or the characterization of the devices.

For a proper setup of a printing system also a color calibration setting may be defined. In a preferred embodiment said color calibration setting should be the same between the batches because it defines the color gamut that can be reached and the spectra that are obtained. In this way not only a color match can be provided for a given set of viewing conditions, but the match between different batches will be retained for variations of the illuminantion

Color calibration settings are for example well explained in EP 1 083 739 A2 (AGFA NV) where printing systems are represented consisting of multi-density inks with potentially multiple drop sizes per ink. All these variations are referred to as partial inks that all make up a global ink. For example, light cyan with three drop sizes, and heavy cyan with two drop sizes are seen as 5 partial inks that are combined by an ink split curve per partial ink into the global ink cyan. Per ink split curve, the start position, maximal position and end position of a partial ink is called a switch point. These points can be defined either relatively, e.g. in ink percentage, or absolutely, e.g. in CIELAB values.

In a preferred embodiment, when a printing system is using light and heavy colorants and/or is able to form multiple drop sizes per colorant for a given pixel location of the object, the color calibration setting comprises such colorant split curve wherein more preferably a switch point in said colorant split curve is defined spectrally and partial steering values can be selected so that spectral differences between obtained spectral data and reference spectral aim values are minimal. This minimization can be done over the whole spectral space with equal contributions of all wavelengths or a weighted average can be applied. These weighing values depend on the observer and illuminants under which the color should remain a match as good as possible. In this way the system can be calibrated to spectral aim values.

A typical use case would be a light black ink that differs in pigment concentration compared to a given printing system. To get a spectral match for a step wedge of the global black ink, the ink percentage needs to be modified so that the same amount of pigment is printed on the substrate. If also the substrate differs, the combination ink/substrate is optimized to get the best spectral match with each batch.

If the switch points are calibrated spectrally, also the gradation from 0% till 100% global ink values should be mapped so that the best spectral match is obtained compared to each batch. This mapping is not necessarily applied along a one-dimensional path in the partial ink space but also multi-dimensional combinations of partial inks can be used to get the best spectral match. During this process, continuity of the partial ink values compared to the global ink values needs to be controlled to avoid abrupt changes of partial inks.

To be able to recalibrate a printing system to its initial state, the printing system is preferably not calibrated to its most saturated or darkest position. This gives the possibility to recalibrate the printing system to steering values higher than the original settings which might be needed if for example a given ink batch contains less pigments than the original batch. As a result, the gamut of the master color profile is smaller than its maximal possible gamut so that colors mapped to the gamut boundary are likely still reproducible at a later time frame. For example, for a CMYK-printer, the maximum steering value of cyan (C); magenta (M) and black (K) are 95% and the maximum steering value of yellow (Y) is 85%.

For the calibration different calibration criteria can be used for the different global colorants. Per global colorants the calibration criterion can be optimized to obtain spectral matching. For example, spectral matching can be based on a weighted average over the spectrum to retain the match as good as possible for a given set of observers and illuminants.

Hence to be able to make a batch of a printed object on a given printing system, a set of parameters such as the calibration criteria and aim values of the master color calibration setting needs to be communicated to this device so that it can be calibrated in the same way.

Color calibration setting are sometimes also called ink tables (each for one global colorant)

The master color calibration setting and master color characterization setting are preferably stored together in a master steering file. Said master steering file have then to be accompanied with the master image when a new batch of printed objects is manufactured when the preferred embodiment is used.

For some special applications, there is an additional finishing step after printing the image such as a varnish in offset printing or a lamination step for décor printing. As this extra step is sometimes applied at a location not close to the printing system of a batch of printed objects, it is not practical to make profiles that include both the printer behavior and the finishing step. To calibrate, characterize and verify the printer status, from a practical point of view the best approach is obtained by making profiles without the finishing step. In case the input data refers to the final print, a version of the printer profile is needed that includes the finishing step for the creation of the master images. As multiple implementations exist to create finishing layers that all can behave quite differently, the applied finishing step needs to be characterized and applied to the master profile. The master profile with finishing included is only needed for making the master images, all other processing steps can rely on the conventional way of making profiles, so only related to the printer itself without finishing. As in some cases image data is exchanged with and sometimes without the finishing effect, it is important that the finishing applied later on is characterized and can be selected during the creation of the master files. Selecting no finishing is also one of the options.

As different applications work with different viewing conditions to create color matches, also the effect of at least the illuminant and the observer need to be taken into account. In graphic arts, D50 and the 1931 degree standard observer are the default viewing conditions, however for décor printing often D65 is used as illuminant. As the default viewing conditions are different from print application to print application, illuminants different from the standard D50 approach used in graphic arts will be used to evaluate prints. This needs to be reflected in the creation of the master images by making use of a master profile that is based on the same viewing conditions as the print application. If the viewing conditions of the master profile differ, the profile needs to be recalculated which is only possible if the profile is based on spectral data. If no spectral data is available, the profile needs to be recreated from scratch. Also all aim lab values should be defined on the specified viewing conditions and color measurements used to verify the resulting prints needs to be based on the same settings. For the visualization of the printed décors, both the effect of different viewing conditions and/or different laminations can be simulated. For this functionality, reference measurement files will be created for the given conditions which also for this case is only possible to apply is an easy and accurate way if all the characterization measurements are spectral.

### Dominant colors extraction

In preferred embodiments there is a step of extracting dominant colors out of an image. Said dominant colors defines the main colors in said image. The extraction can be performed by scanning the image on colors which appears the most in said image. The distribution of the colors can be measured and histograms can be built to know the most dominant colors in said image. Dominant colors dominate the other colors in said image. They occur in said image more than said other colors.

Preferably the extraction of said dominant colors is using a k-means clustering approach. K-means is a known clustering algorithm typically used in Machine Learning where a set of data points are to be categorized to 'k' groups. It works on a distance calculation which is by preference based on a uniform color space. The resulting color of the k-means algorithm not necessarily are all present in the image, often they are the closest colors to a given set of image colors.

If the image is a wood pattern or stone pattern or having a repeating character not the whole image has to be scanned for said extraction. A part of said image may be selected first whereon the scanning is performed. This is a faster method and uses less memory in the workflow system.

If the image is large, scanning the image to obtain the dominant colors, only a part of the pixels of the image can be used; e.g. for example with steps of N pixels wherein N larger than 1 or only pixels on the k.Xth row and the k.Yth column wherein k is larger than or equal to 0 and X and Y are larger than 1. This is a faster method and used less memory in the workflow system. N is preferably between 2 an 32 pixels, X and Y are preferably between 2 and 32. In this way a subimage is selected without applying convolutions, so original pixel values are still used to define the dominant colors.

Another method of extraction of dominant color is disclosed in WO2020/079038 (AGFA NV) but this related to oligochromatic image - images with a low number of different colors.

## Claims

1. A method for enhancing color consistency between batches of printed objects representing a same image wherein the method comprises the steps of:
- selecting an image, determined in an input colorant space where from an input color profile is obtained (100);
- selecting a master color profile for converting colors to a master colorant space wherein said master color profile is determined by a master color characterization setting (200);
- obtaining a master image in a master colorant space from the selected image by color converting the selected image from the input colorant space to the master colorant space with the input color profile and the master output color profile (300);
- selecting a printing system for a batch of a printed object comprising the selected image and obtaining an output color profile for converting colors to a batch colorant space wherein said batch color profile is determined by a batch color characterization setting (400);
- color converting the master image from the master colorant space to the batch colorant space with the master output color profile and the batch output color profile (500);
- printing the color converted master image on the printing system to obtain the batch of the printed object (600); and
wherein the batch color characterization setting is the same as the master color characterization setting.

2. The method according to claim 1 wherein the master color profile is also defined by a master calibrating setting; and the batch color profile is also defined by a batch calibration setting; and wherein the master calibrating setting is the same as the batch calibrating setting.

3. The method according to claim 1 or to claim 2 wherein the color conversion steps are using absolute colorimetric rendering intent.

4. The method according to claim 1 or to claim 2 wherein the color conversion steps are using absolute tone mapping.

5. The method according to claim 1 or to clam 2 wherein the color conversion steps are using spectral matching.

6. The method according to any of the claims from 1 to 5 wherein the master color output profile comprises a grid of color measurements of combinations of steering values in the master colorant space wherein said color measurements and said combinations are used for color conversions between colorant spaces and wherein said grid comprises color measurements of dominant colors extracted from the master image.

7. The method according to any of the claims from 1 to 5 wherein the batch color output profile comprises a grid of color measurements of combinations of steering values in the batch colorant space wherein said color measurements and said combinations are used for color conversions between colorant spaces and wherein said grid comprises color measurements of dominant colors extracted from the color converted master image.

8. The method according to claim 6 or claim 7 wherein the step of color extraction is using k-means clustering.

9. The method according to the claims from 6 to 8 wherein the color measurements are measured spectrally.

10. The method according to any of the claims from 1 to 9 wherein the master output color profile and/or the batch output color profile are regularized.

11. The method according to any of the claims from 1 to 10 wherein during the printing-step additionally a print-target is printed which comprises patches of dominant colors extracted from the color converted master image for evaluating the prints on consistency by measuring said patches.

12. The method according to claim 11 wherein the dominant color extraction step is using k-means clustering.

13. The method according to any of the claims from 1 to 12 wherein the selected printing system is an inkjet printing system.

14. The method according to claim 13 wherein the printed object is a decorative layer of a ceramic tile, a laminate panel, vinyl tile, a window glass, a natural leather or fabric.

15. A workflow system comprising means for carrying out steps of the method of any of the claims from 1 to 12 and which collects in a memory the master color output profile and the master images
and which transfers the content of the memory to the selected printing system.

## Patentansprüche

1. Ein Verfahren zur Verbesserung der Farbkonsistenz zwischen Chargen gedruckter Gegenstände, die ein gleiches Bild darstellen, wobei das Verfahren die folgenden Schritte umfasst:
- Auswählen eines Bildes, das in einem Eingabefarbmittelraum, aus dem ein Eingabefarbprofil erhalten wird (100), bestimmt wird,
- Auswählen eines Masterfarbprofils zur Konvertierung von Farben in einen Masterfarbmittelraum, wobei das Masterfarbprofil durch eine Masterfarbcharakterisierungseinstellung (200) bestimmt wird,
- Erhalten eines Masterbildes in einem Masterfarbmittelraum aus dem ausgewählten Bild durch Farbkonvertierung des ausgewählten Bildes aus dem Eingabefarbmittelraum in den Masterfarbmittelraum mit dem Eingabefarbprofil und dem Masterausgabefarbprofil (300),
- Auswählen eines Drucksystems für eine Charge eines gedruckten, das ausgewählte Bild umfassenden Gegenstands und Erhalten eines Ausgabefarbprofils zur Konvertierung von Farben in einen Chargenfarbmittelraum, wobei das Chargenfarbprofil durch eine Chargenfarbcharakterisierungseinstellung (400) bestimmt wird,
- Farbkonvertierung des Masterbildes aus dem Masterfarbmittelraum in den Chargenfarbmittelraum mit dem Masterausgabefarbprofil und dem Chargenausgabefarbprofil (500),
- Drucken des Masterbildes mit den konvertierten Farben auf dem Drucksystem, um die Charge des gedruckten Gegenstands (600) zu erhalten, und
wobei die Chargenfarbcharakterisierungseinstellung und die Masterfarbcharakterisierungseinstellung identisch sind.

2. Das Verfahren nach Anspruch 1, wobei das Masterfarbprofil ebenfalls durch eine Masterkalibrierungseinstellung definiert ist und das Chargenfarbprofil ebenfalls durch eine Chargenkalibrierungseinstellung definiert ist und wobei die Masterkalibrierungseinstellung und die Chargenkalibrierungseinstellung identisch sind.

3. Das Verfahren nach Anspruch 1 oder nach Anspruch 2, wobei in den Farbkonvertierungsschritten eine absolute farbmetrische Wiedergabeabsicht (Rendering Intent) benutzt wird.

4. Das Verfahren nach Anspruch 1 oder nach Anspruch 2, wobei in den Farbkonvertierungsschritten absoluter Tone Mapping benutzt wird.

5. Das Verfahren nach Anspruch 1 oder nach Anspruch 2, wobei in den Farbkonvertierungsschritten spektrale Abgleichung benutzt wird.

6. Das Verfahren nach einem der Ansprüche 1 bis 5, wobei das Masterfarbausgabeprofil ein Gitter von Farbmessungen von Kombinationen von Steuerwerten im Masterfarbmittelraum umfasst, wobei die Farbmessungen und die Kombinationen für Farbkonvertierungen zwischen Farbmittelräumen verwendet werden und wobei das Gitter Farbmessungen von aus dem Masterbild extrahierten vorherrschenden Farben umfasst.

7. Das Verfahren nach einem der Ansprüche 1 bis 5, wobei das Chargenfarbausgabeprofil ein Gitter von Farbmessungen von Kombinationen von Steuerwerten im Chargenfarbmittelraum umfasst, wobei die Farbmessungen und die Kombinationen für Farbkonvertierungen zwischen Farbmittelräumen verwendet werden und wobei das Gitter Farbmessungen von aus dem Masterbild mit konvertierten Farben extrahierten vorherrschenden Farben umfasst.

8. Das Verfahren nach Anspruch 6 oder Anspruch 7, wobei im Schritt der Farbextraktion k-Means-Clustering verwendet wird.

9. Das Verfahren nach einem der Ansprüche 6 bis 8, wobei die Farbmessungen spektral gemessen werden.

10. Das Verfahren nach einem der Ansprüche 1 bis 9, wobei das Masterausgabefarbprofil und/oder das Chargenausgabefarbprofil regularisiert werden.

11. Das Verfahren nach einem der Ansprüche 1 bis 10, wobei während des Druckschritts zusätzlich ein Drucktarget gedruckt wird, das aus dem Masterbild mit konvertierten Farben extrahierte Felder vorherrschender Farben umfasst, um durch Messung der Felder die Drucke auf Konsistenz auszuwerten.

12. Das Verfahren nach Anspruch 11, wobei im Schritt der Extraktion vorherrschender Farben k-Means-Clustering verwendet wird.

13. Das Verfahren nach einem der Ansprüche 1 bis 12, wobei das ausgewählte Drucksystem ein Tintenstrahldrucksystem ist.

14. Das Verfahren nach Anspruch 13, wobei der gedruckte Gegenstand eine dekorative Schicht einer Keramikfliese, einer Laminatplatte, einer Vinylfliese, eines Fensterglases, eines Naturleders oder eines Gewebes ist.

15. Ein Arbeitsablaufsystem, umfassend Mittel zur Ausführung der Schritte des Verfahrens nach einem der Schritte 1 bis 12 und das das Masterfarbausgabeprofil und die Masterbilder in einem Speicher sammelt und den Inhalt des Speichers zum ausgewählten Drucksystem überträgt.

## Revendications

1. Procédé pour l'amélioration de la cohérence de couleur entre des lots d'objets imprimés comprenant une image identique, **caractérisé en ce que** le procédé comprend les étapes consistant à:
- sélectionner une image déterminée dans un espace de colorant d'entrée à partir duquel il est obtenu un profil de couleur d'entrée (100),
- sélectionner un profil de couleur maître pour convertir des couleurs en un espace de colorant maître, ledit profil de couleur maître étant déterminé par un réglage de caractérisation de couleur maître (200),
- obtenir une image maître dans un espace de colorant maître à partir de l'image sélectionnée en convertissant les couleurs de l'image sélectionnée de l'espace de colorant d'entrée en l'espace de colorant maître avec le profil de couleur d'entrée et le profil de couleur de sortie maître (300),
- sélectionner un système d'impression pour un lot d'un objet imprimé comprenant l'image sélectionnée et obtenir un profil de couleur de sortie pour la conversion de couleurs en un espace de colorant de lot, ledit profil de couleur de lot étant déterminé par un réglage de caractérisation de couleur de lot (400),
- convertir les couleurs de l'image maître à partir de l'espace de colorant maître en l'espace de colorant de lot avec le profil de couleur de sortie maître et le profil de couleur de sortie de lot (500),
- imprimer l'image maître aux couleurs converties sur le système d'impression afin d'obtenir le lot de l'objet imprimé (600), et **caractérisé en ce que** le réglage de caractérisation de couleur de lot et le réglage de caractérisation de couleur maître sont identiques.

2. Procédé selon la revendication 1, **caractérisé en ce que** le profil de couleur maître est également défini par un réglage de calibrage maître et que le profil de couleur de lot est également défini par un réglage de calibrage de lot et que le réglage de calibrage maître et le réglage de calibrage de lot sont identiques.

3. Procédé selon la revendication 1 ou la revendication 2, **caractérisé en ce que** les étapes de conversion de couleur utilisent une intention de rendu colorimétrique absolue.

4. Procédé selon la revendication 1 ou la revendication 2, **caractérisé en ce que** les étapes de conversion de couleur utilisent le mappage tonal absolu.

5. Procédé selon la revendication 1 ou la revendication 2, **caractérisé en ce que** les étapes de conversion de couleur utilisent la mise en correspondance spectrale.

6. Procédé selon l'une quelconque des revendications 1 à 5, **caractérisé en ce que** le profil de sortie de couleur maître comprend une grille de mesures colorimétriques de combinaisons de valeurs de commande dans l'espace de colorant maître, lesdites mesures colorimétriques et lesdites combinaisons étant utilisées pour les conversions de couleur entre des espaces de colorant et ladite grille comprenant des mesures colorimétriques de couleurs dominantes extraites de l'image maître.

7. Procédé selon l'une quelconque des revendications 1 à 5, **caractérisé en ce que** le profil de sortie de couleur de lot comprend une grille de mesures colorimétriques de combinaisons de valeurs de commande dans l'espace de colorant de lot, lesdites mesures colorimétriques et lesdites combinaisons étant utilisées pour les conversions de couleur entre des espaces de colorant et ladite grille comprenant des mesures colorimétriques de couleurs dominantes extraites de l'image maître aux couleurs converties.

8. Procédé selon la revendication 6 ou la revendication 7, **caractérisé en ce que** l'étape de l'extraction de couleur utilise le partitionnement en k-moyennes.

9. Procédé selon l'une quelconque des revendications 6 à 8, **caractérisé en ce que** les mesures colorimétriques sont des mesures spectrales.

10. Procédé selon l'une quelconque des revendications 1 à 9, **caractérisé en ce que** le profil de couleur de sortie maître et/ou le profil de couleur de sortie de lot sont régularisées.

11. Procédé selon l'une quelconque des revendications 1 à 10, **caractérisé en ce que** lors de l'étape d'impression il est en outre imprimé une mire d'impression comprenant des plages de couleurs dominantes extraites de l'image maître aux couleurs converties afin d'évaluer la cohérence des impressions en mesurant lesdites plages.

12. Procédé selon la revendication 11, **caractérisé en ce que** l'étape de l'extraction de couleurs dominantes utilise le partitionnement en k-moyennes.

13. Procédé selon l'une quelconque des revendications 1 à 12, **caractérisé en ce que** le système d'impression sélectionné est un système d'impression à jet d'encre.

14. Procédé selon la revendication 13, **caractérisé en ce que** l'objet imprimé est une couche décorative d'un carreau céramique, d'un panneau stratifié, d'un carreau en vinyle, d'une vitre de fenêtre, d'un cuir naturel ou d'un tissu.

15. Système de flux de travail comprenant des moyens servant à exécuter les étapes du procédé selon l'une quelconque des revendications 1 à 12 et qui collecte le profil de sortie de couleur maître et les images maîtres dans une mémoire et qui transfère le contenu de la mémoire au système d'impression sélectionné.
